# EUROPEAN PATENT APPLICATION

(11) **EP 1 431 980 A1**
(43) Date of publication of application: **23.06.2004**
(21) Application number: 03027864.2
(22) Date of filing: 04.12.2003
(51) Int. Cl.: G11B 27/10, G11B 20/18, G11B 27/034

(54) **Information recording apparatus and information recording method**

(30) Priority: 18.12.2002 JP 2002366903
(71) Applicant: Kabushiki Kaisha Toshiba, Tokyo 105-8001 (JP)
(72) Inventor: Hattori, Hisahide, c/o Toshiba Corporation, Minato-ku Tokyo 105-8001 (JP)
(74) Representative: Henkel, Feiler & Hänzel

(57) **Abstract**

Defective areas are detected from a medium (ST101), and recordable continuous areas are also detected (ST102). The sizes of the recordable continuous areas are compared with those of recording data of a recording unit, and a recordable continuous area is determined that has a size equal to or larger than the data size of the recording data of the recording unit and serves as a recording destination of the recording data (ST103). Based on this determination, position information indicating that the recording data of the recording unit is recorded on the determined recordable continuous area is recorded on a specific area of the information recording area, and the recording data of the recording unit is recorded on the determined recordable continuous area (ST104).

## Description

The present invention relates to an information recording apparatus and information recording method for recording information on an information storage medium, such as a DVD-R.

In recent years, a DVD-Video Recording standard (to be referred to as a DVD-VR standard hereinafter) has been formulated as a format for recording video data on an optical disk or magnetic disk in real time. The DVD-VR standard adopts a format that complies with MPEG (Moving Picture Expert Group), which is the international standard that specifies the video data encoding format, and allows easy real-time video recording, playback, and editing of recorded data.

On the other hand, DVD-Video media, which store video products such as movies as read-only media, adopt a DVD-Video standard as its recording format. The DVD-Video standard also complies with MPEG2, like the DVD-VR standard.

Also, DVD-R disks, which are of write once type and are physically compatible to DVD-Video disks, have become the dominant format for DVD disks. When data is written on a DVD-R disk using the DVD-Video standard format, the DVD-R disk can be played back in an environment that allows playback of that DVD-Video.

For data compliant with the DVD-VR standard, the data is converted into the DVD-Video standard, and then written on a DVD-R. At this time, a title which forms the data of the DVD-Video standard is continuously recorded from the innermost periphery of the disk.

Data in individual files that comply with the DVD-Video standard specification are physically continuously recorded on the disk. For this reason, when defective sectors are formed on a DVD-R due to scratches or the like, data of the DVD-Video standard cannot often be appropriately recorded.

As a measure against any disk defects, U.S. Patent No. 6,530,037 discloses a technique for acquiring information associated with defective areas on a disk, and recording data in a recording process while avoiding the defective areas.

However, the technique disclosed in the above reference is a means for logically implementing continuous recording, but data is physically discontinuous. Since data in individual files complying with the DVD-Video standard must be physically continuously recorded, the technique disclosed in the above reference cannot physically continuously record data in individual files complying with the DVD-Video standard.

The present invention has been made in consideration of the above situation, and has as its object to provide an information recording apparatus and information recording method, which can physically continuously record recording data for predetermined recording units.

An information recording apparatus according to an embodiment of the present invention has a detection unit configured to detect defective areas in an information recording area on an information storage medium, and to detect recordable continuous areas in the information recording area based on the detected defective areas. A determination unit is also provided and is configured to determine a first recordable continuous area that has a size not less than a first data size of a first recording data unit. Further, there is provided a recording unit configured to record the first recording data unit on the first recordable continuous area, on the basis of a determination result of the determination unit.

An information recording method according to an embodiment of the present invention performs the steps of detecting defective areas in an information recording area on an information storage medium; detecting recordable continuous areas in the information recording area based on the detected defective areas; determining a first recordable continuous area that has a size not less than a first data size of a first recording data unit; and recording the first recording data unit on the first recordable continuous area based on the determination.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing an example of an optical disk recording/playback apparatus according to an embodiment of the present invention;
FIG. 2 shows an example of the data structure complying with the DVD-Video standard;
FIG. 3 shows an example of a VMGI access method via a file system;
FIG. 4 is a flowchart showing an example of a title menu playback sequence;
FIG. 5 is a flowchart showing an example of a title playback sequence;
FIG. 6 shows an example of relocations for respective VTSs;
FIG. 7 shows an example of relocations for respective files in a VTS;
FIG. 8 shows an example of file management using an extent;
FIG. 9 is a flowchart showing an example of a defective area detection process for detecting defective areas on a DVD-R disk;
FIG. 10 shows an example of write parameters in a mode select command;
FIG. 11 is a flowchart showing an example of a data allocation sequence; and
FIG. 12 is a flowchart for explaining an example of a process for physically continuously recording data for respective data units while avoiding defective areas on an information storage area of an information storage medium.

Preferred embodiments of the present invention will be described hereinafter with reference to the accompanying drawings.

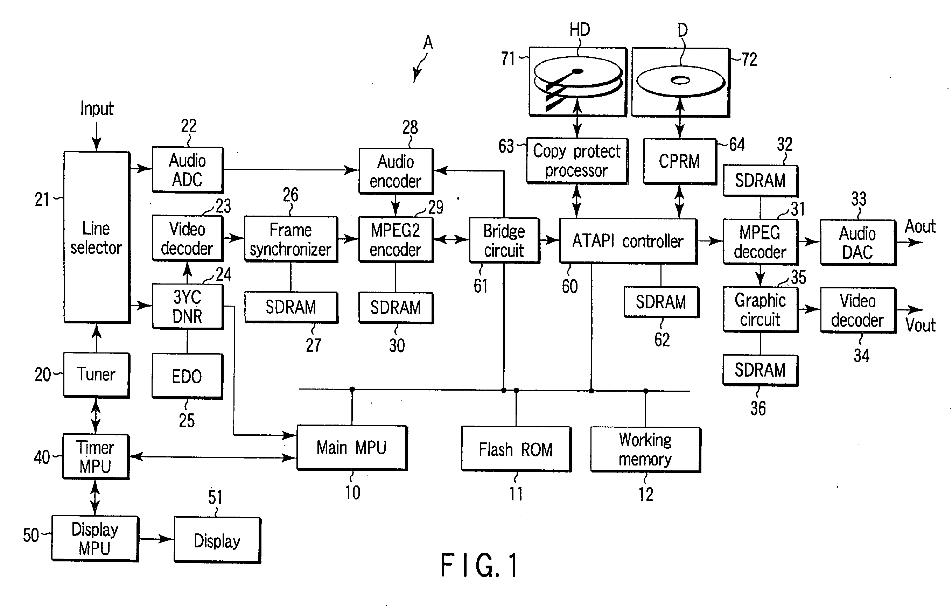

FIG. 1 is a block diagram showing an example of an optical disk recording/playback apparatus according to an embodiment of the present invention. An optical disk recording/playback apparatus A shown in FIG. 1 comprises a main MPU 10, flash ROM 11, working memory 12, tuner 20, line selector 21, audio AD converter 22, video decoder 23, 3YCDNR (3YC Dolby Noise Reduction) 24, EDO (Extended Data Out) 25, frame synchronizer 26, SDRAM 27, audio encoder 28, MPEG2 encoder 29, SDRAM 30, MPEG decoder 31, SDRAM 32, audio DA converter 33, video decoder 34, graphic circuit 35, SDRAM 36, timer MPU 40, display MPU 50, display 51, ATAPI (Attachment Packet Interface) controller 60, bridge circuit 61, SDRAM 62, copy protect processor 63, and CPRM 64.

The operation of the overall optical disk recording/playback apparatus A is controlled by the main MPU 10. The main MPU 10 is connected to the flash ROM 11 and working memory 12 via a data bus. An input terminal (line-in) and the tuner 20 are connected to the line selector 21. The tuner 20 is connected to the timer MPU 40. The timer MPU 40 controls the operation of the tuner 20. The timer MPU 40 is also connected to the display MPU 50, which is connected to the display 51. The timer MPU 40 and display MPU 50 control the operation of the display 51.

A signal output from the line selector 21 is input to the audio AD converter 22 and 3YCDNR 24. An audio signal output from the audio AD converter 22 is input to the audio encoder 28. The audio encoder 28 encodes the input audio signal and outputs the encoded audio signal to the MPEG2 encoder 29. The SDRAM 30 is connected to the MPEG2 encoder 29. The EDO 25 is connected to the 3YCDNR 24. A signal output from the 3YCDNR 24 is input to the video decoder 23. A signal output from the video decoder 23 is input to the frame synchronizer 26. The SDRAM 27 is connected to the frame synchronizer 26. A frame signal output from the frame synchronizer 26 is input to the MPEG2 encoder 29.

The MPEG2 encoder 29 encodes an input signal. With this encoding, for example, MPEG stream data is generated. The MPEG stream data generated by the MPEG2 encoder 29 is output to the bridge circuit 61. The bridge circuit 61 outputs the input MPEG stream data to the ATAPI controller 60. The SDRAM 62 is connected to the ATAPI controller 60. The ATAPI controller 60 outputs the MPEG stream data to a disk drive 71 via the copy protect processor 63 or outputs that data to a disk drive 72 via the CPRM 64.

The disk drive 71 records MPEG stream data on a hard disk HD and reads MPEG stream data recorded on the hard disk HD. The disk drive 72 records MPEG stream data on an optical disk D and reads MPEG stream data recorded on the optical disk D.

The MPEG stream data read from the disk is input to the MPEG decoder 31 via the ATAPI controller 60. The SDRAM 32 is connected to the MPEG decoder 31. The MPEG decoder 31 decodes the MPEG stream data, and outputs the decoded data to the audio DA converter 33 and graphic circuit 35. The audio DA converter 33 outputs an audio signal contained in the MPEG stream data. The SDRAM 36 is connected to the graphic circuit 35. A graphic signal output from the graphic circuit 35 is input to the video decoder 34. The video decoder 34 outputs a video signal.

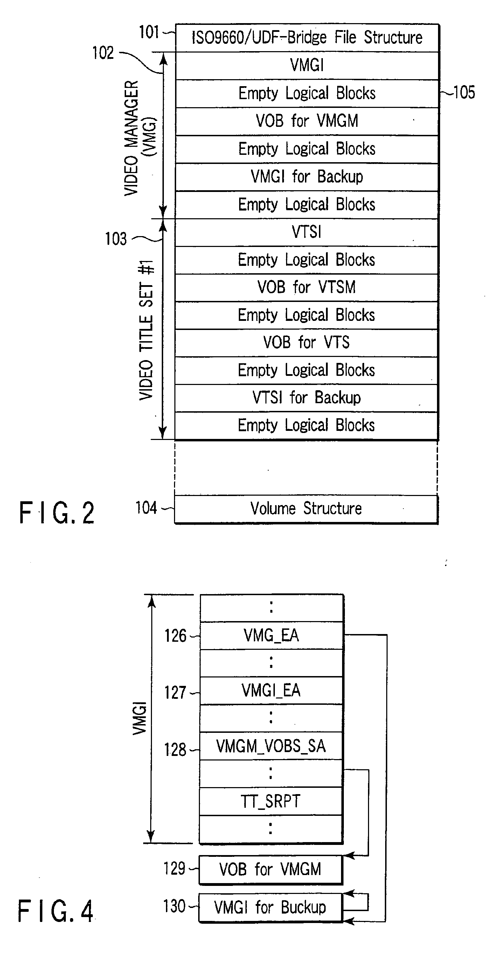

FIG. 2 shows an example of the data structure complying with the DVD-Video standard. Data complying with the DVD-Video standard contains video management information (Video Manager) and video title information (Video Title Set), as shown in FIG. 2.

The Video Manager (VMG 102) is located at one location on a disk and provides management information for each title on the disk, and a maximum of 99 Video Title Sets (VTSs 103) are allowed to be recorded. The VMG 102 controls playback of various data contained in each VTS 103. That is, the VMG 102 serves as playback control information. From the innermost periphery of the disk, an ISO9660/UDF Bridge File Structure 101 (file system), the VMG 102, the VTSs 103, and a Volume Structure 104 are recorded in the order named. Empty logical blocks 105 are not indispensable, and their sizes are not fixed.

The VMG 102 contains Video Manager Information (VMGI). Each VTS 103 contains Video Title Set Information (VTSI). The recording/playback apparatus shown in FIG. 1 reads the VMGI and each VTSI via the file system, and plays back a DVD-Video title on the basis of the read information.

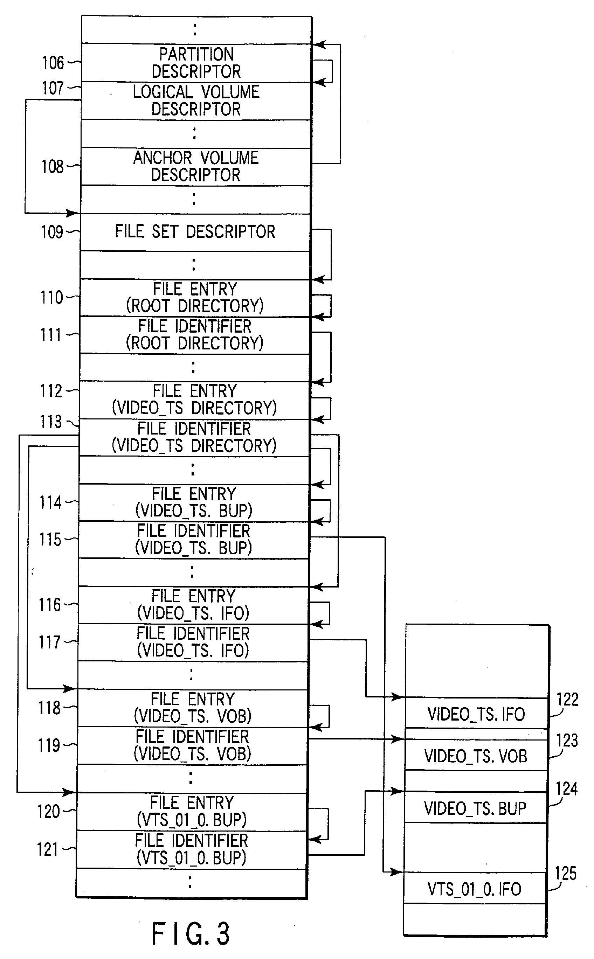

FIG. 3 shows a VMGI access method via the file system. Upon insertion of a DVD-R disk recorded with DVD-Video data, the recording/playback apparatus shown in FIG. 1 reads a Partition Descriptor 106 from the disk with reference to an Anchor Volume Descriptor 108 recorded at the fixed address on the disk, thus detecting the playback range on the disk. Furthermore, when the apparatus reads out a File Set Descriptor 109 with reference to a Logical Volume Descriptor 107, it can refer to Root directories 110 and 111 and VIDEO_TS directories 112 and 113, and is ready to access VMGI (VIDEO_TS.IFO 122).

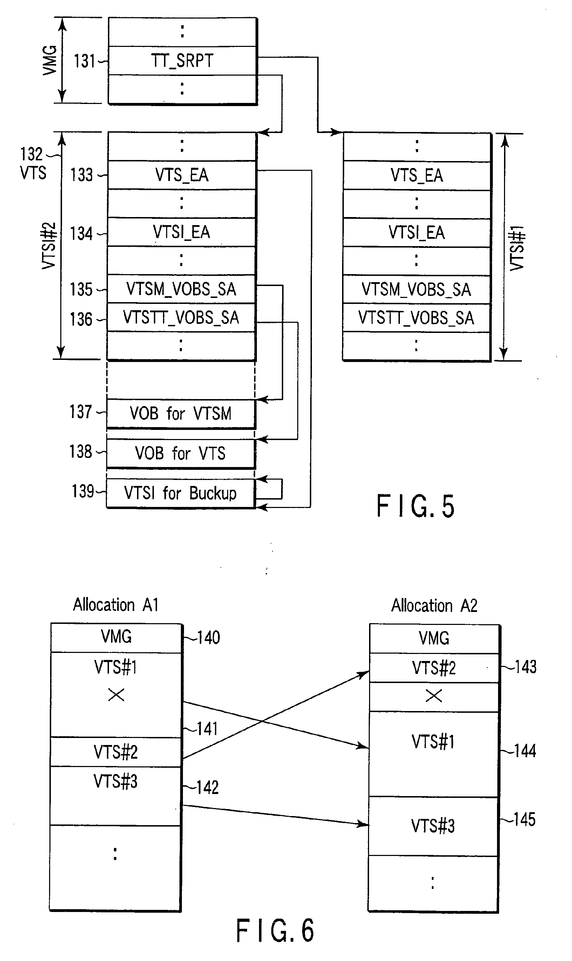

FIG. 4 shows a title menu playback sequence. A VOB for VMGM (VIDEO_TS.VOB 129) is referred to and played back by a VMGM_VOBS_SA 128 in the VMGI.

FIG. 5 shows a tile playback sequence. Upon receiving a title playback request, TT_SRPT described in the VMGI refers to a designated VTS 132. In this example, VTSI (VTS_01_0.IFO) of VTS#2 is searched for.

In the case of menu playback, a VOB for VTSM 137 refers to a VTSM_VOBS_SA 135. In the case of title playback, a VOB for VTS 138 refers to a VTSTT_VOBS_SA 136.

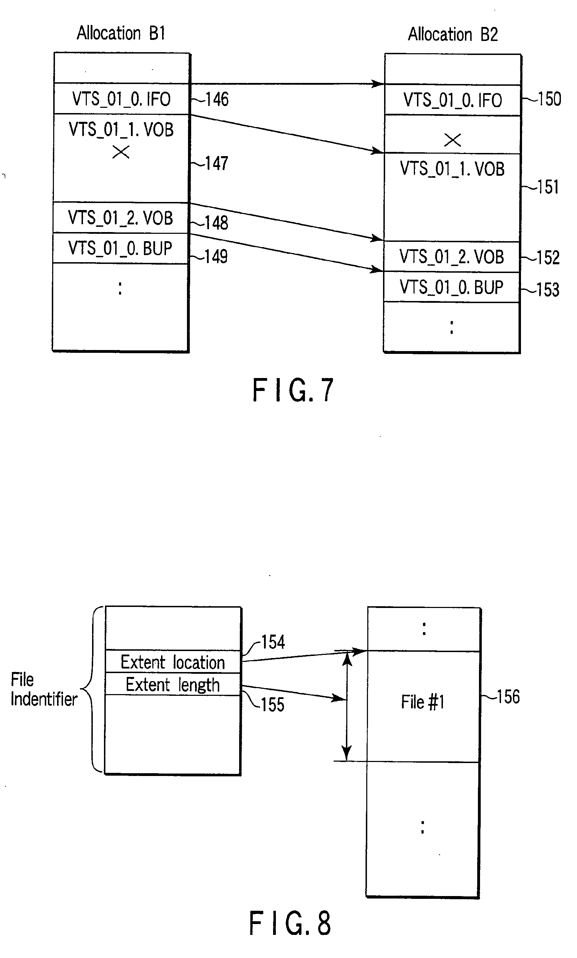

FIGS. 6 and 7 show the mechanism of a recording process for recording data while avoiding defective areas (defective sectors). In other words, FIGS. 6 and 7 show data relocations.

FIG. 6 shows the relocation state for respective VTSs as predetermined recording units. The recording/playback apparatus shown in FIG. 1 records data in allocation A2 while avoiding a defective area in response to a recording instruction of allocation A1. The main MPU 10 in the recording/playback apparatus detects defective areas in a data area of the disk D in advance, and detects a recordable continuous area from this defect detection result. The main MPU 10 in the recording/playback apparatus compares the sizes of a plurality of recordable continuous areas with those of a plurality of recording data, and determines efficient data recording destinations.

For example, assume that a defective area is present on a disk, as shown in FIG. 6. If a recording instruction of allocation A1 is simply executed, the recording destination of VTS#1 includes the above defective area, as shown in the left hand side of FIG. 6. That is, according to the recording instruction of allocation A1, VTS#1 cannot be physically continuously recorded. Hence, the main MPU 10 of the recording/playback apparatus determines allocation A2 shown on the right hand side of FIG. 6. According to a recording instruction of allocation A2, for example, the initial recording destination of VTS#1 is replaced by that of VTS#2 having a data size smaller than that of VTS#1. In this way, VTS#1 and VTS#2 can be recorded without including the above defective area.

FIG. 7 shows the relocation state for respective files as predetermined recording units in a VTS. The VTS contains navigation data (IFO file, BUP file), and presentation data (VOB files). The recording/playback apparatus shown in FIG. 1 records data in allocation B2 while avoiding a defective area in response to a recording instruction of allocation B1. The main MPU 10 in the recording/playback apparatus detects defective areas in a data area of the disk D in advance, and detects a recordable continuous area from this defect detection result. The main MPU 10 in the recording/playback apparatus compares the sizes of a plurality of recordable continuous areas with those of a plurality of recording data, and determines efficient data recording destinations.

For example, assume that a defective area is present on a disk, as shown in FIG. 7. If a recording instruction of allocation B1 is simply executed, the above defective area is included in the recording destination of VTS_01_1.VOB, as shown in FIG. 7. That is, according to the recording instruction of allocation B1, VTS_01_1.VOB cannot be physically continuously recorded. Hence, the main MPU 10 of the recording/playback apparatus determines allocation B2. According to a recording instruction of allocation B2, after VTS_01_0.IFO is recorded, the above defective area is skipped, and VTS_01_1.VOB is recorded. In this way, VTS_01_0.IFO and VTS_01_1.VOB can be recorded without including the above defective area. Note that the aforementioned relocation can also be applied to the VMG. Further, the relocation methods shown in FIGS. 6 and 7 can be used in combination.

Upon execution of the above relocation, the relative addresses of respective files in each VTS (VMG) changes. For this reason, the values of VTSM_VOBS_SA (VMGM_VOBS_SA) and VTSTT_VOBS_SA in VTSI (VMGI) are changed in correspondence with the relocated addresses.

FIG. 8 shows an access method to a file. A file system supported by the DVD-Video standard is called UDF-Bridge. UDF-Bridge is a common file system to the UDF (Universal Disk Format) file system for rewritable media, and a file system ISO9660 for read-only media, which is adopted as a standard format in CD-ROMs. That is, UDF is managed under the limitations of ISO966

Upon generation of access to a file, the file system refers to an Extent Location 154 and an Extent Length 155 in a File Identifier of a relevant file, thus detecting the location and playback length of DVD-Video data. That is, both the Extent Location 154 and Extent Length 155 in the File Identifier can be considered as location information.

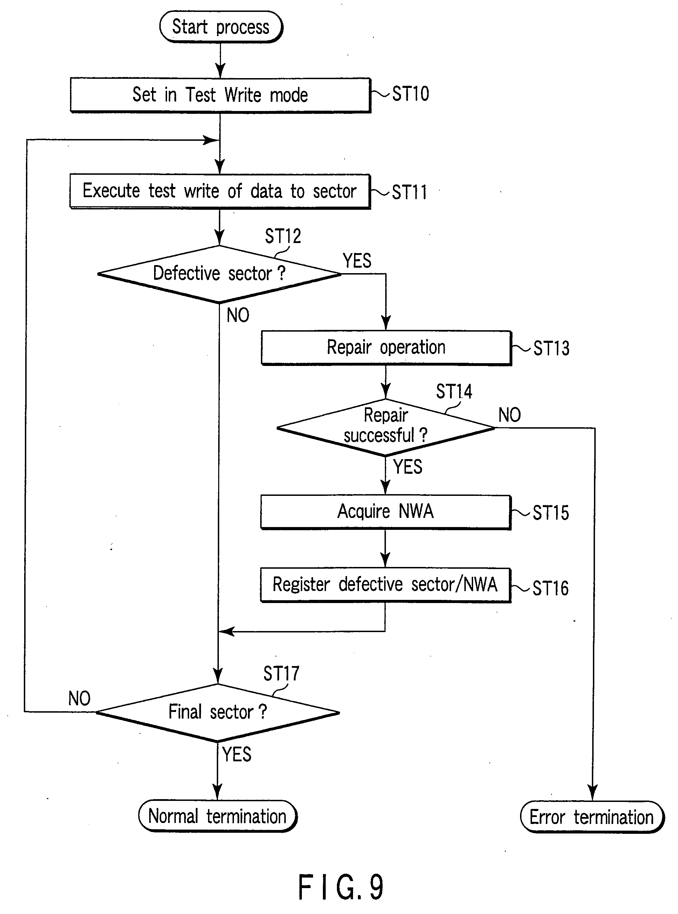

FIG. 9 is a flowchart showing a defective area detection process for detecting defective areas on a data area of a DVD-R disk. Recordable continuous areas can be detected from the detected defective areas.

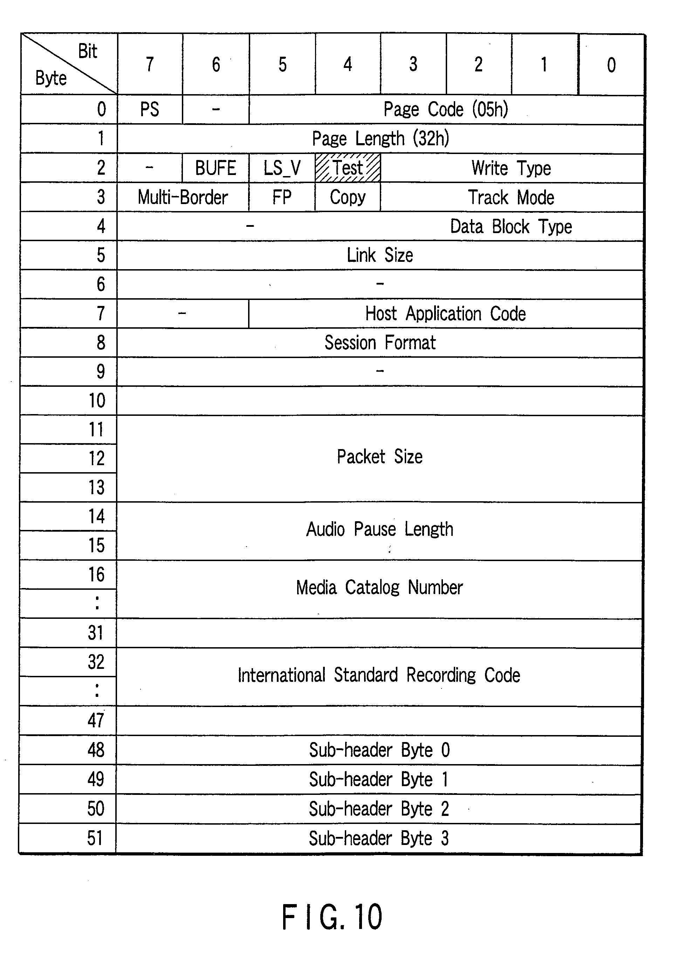

A host sets a test write mode in the recording/playback apparatus shown in FIG. 1 (ST10). In a mode select command shown in FIG. 10, "1" is inserted into a bit of a write parameter "Test" to issue the mode select command, thereby setting the test write mode.

After that, all sectors of an information recording area of an information storage medium such as a DVD-R or the like undergo a data test write process (ST11 to ST17). This test write process does not actually write data, but uses a low power laser which does not cause a phase change on the disk but rather monitors the reflected light to determine defective areas of the disk.

If a write error has occurred at a predetermined sector, this sector is determined to be a defective sector (ST12, YES), and a repair operation is made using a repair operation function supported by the recording/playback apparatus shown in FIG. 1 (ST13). If a defect has been successfully repaired (ST14, YES), the next writable address (NWA) is acquired (ST15), and the write process is continued. As the NWA, an address of a sector 4 x 16 sectors, i.e., 4 ECC (Error Correction Code) blocks ahead of the defective sector is adopted. The defective area and the NWA are registered in a management table (ST16). This management table is used to relocate files upon actually writing data. If the repair has failed (ST14, NO), error information is returned to tell the user to use another disk. Even when it is determined that the repair operation has failed, as a result of the test, the disk can still be used to store small amounts of data or small data files.

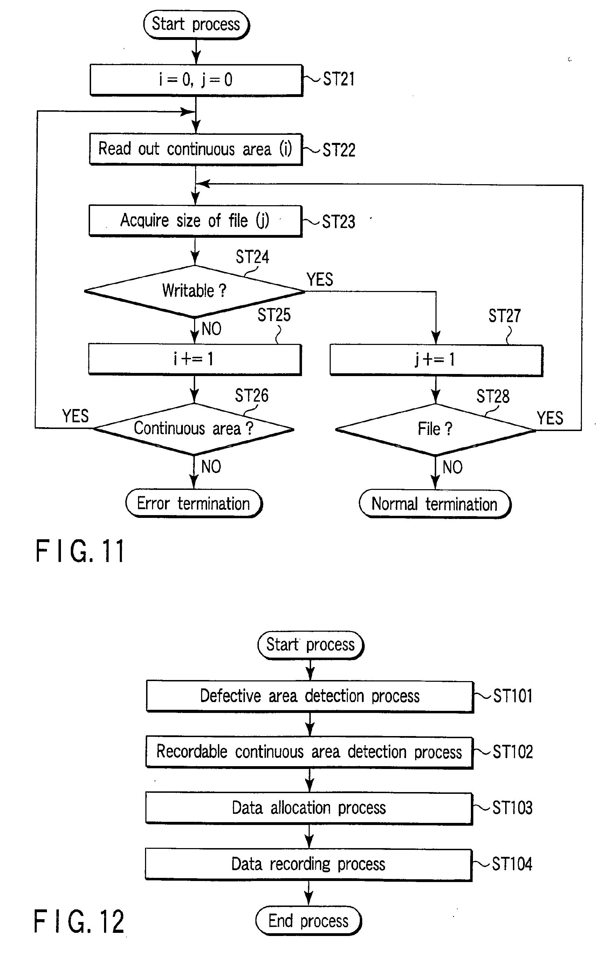

FIG. 11 is a flowchart showing a write process. The UDF-Bridge file system has one file managed by a pair of Extent Location 154 and Extent Length 155 (FIG. 8). For this reason, areas that can record respective files are assured to be within a recordable continuous area.

The size of the first recordable continuous area is acquired from the management table generated in the test write process (ST21, ST22). Also, the size of the first file, which is the recording data for a predetermined recording unit, to be written is acquired (ST23). The acquired size of the recordable continuous area is compared with that of the first file to be written. If the size of the recordable continuous area is equal to or larger than that of the file to be written, it is determined that the file is writable (ST24, YES), and the file write position is tentatively determined in such a case. Furthermore, the size of the next file is acquired, and if this recordable continuous area has additional free space, not already allocated to a file, the process is repeated until all files are processed (ST27, ST28).

If the free space of this recordable continuous area becomes equal to or smaller than a predetermined size, i.e., if no writable area is available, the next recordable continuous area is acquired from the management table (ST25, YES), and the above process is repeated. If all recordable continuous areas have been processed before files to be written are written, an error is determined.

Upon completion of all processes, as described above, the addresses of a file system (FIGS. 3 and 8) and VTSI (VMGI (FIGS. 4 and 5)) are determined on the basis of the tentatively determined write positions, and data is written to the disk.

FIG. 12 is a flowchart for explaining a process for physically continuously recording data for predetermined data units while avoiding defective areas that may be present on an information storage area of an information storage medium. On the basis of an instruction from the host, the main MPU 10 of the recording/playback apparatus shown in FIG. 1 executes a defective area detection process (ST101). That is, the main MPU 10 detects defective areas (defective sectors) from an information storage area of an information storage medium (optical disk D), and generates a management table in the working memory 12. Details of defective area detection are described above in conjunction with FIG. 9.

The main MPU 10 then executes a recordable continuous area detection process on the basis of the detection result of defective areas (ST102). That is, the main MPU 10 detects continuous recordable areas from information associated with defective areas in the management table generated in the working memory 12. Information of the location of each detected recordable continuous area is additionally written in the management table. (See FIG. 9).

The main MPU 10 executes a data allocation process (ST103). More specifically, the main MPU 10 compares the size of each recordable continuous area managed on the management table with the size of recording data for a predetermined recording unit, and tentatively determines a predetermined recordable continuous area as the recording destination of the predetermined recording data. Details of the data allocation process are described above in conjunction with FIG. 11.

The main MPU 10 directs recording of the predetermined recording data on the predetermined recordable continuous area on the basis of the data allocation process result. The disk drive 72 records position information (Extent) indicating that the recording data for a predetermined recording unit is recorded on the predetermined recordable continuous area in a specific area, and records the predetermined recording data on the predetermined recordable continuous area (ST104).

The above explanation addresses the situation where data recorded in an auxiliary storage device (HDD) is recorded on an information storage medium. That is, a change in recording order, a shift of recording locations for respective VTSs, and a shift of recording locations for respective files have been explained. However, the present invention is not limited to such specific cases.

For example, the present invention can be applied to a case wherein data of the DVD-Video standard is recorded on a disk in real time. In this case, a shift of recording locations for respective VTSs, and a shift of recording locations for respective files are allowed.

Based on the size of a recordable continuous area between neighboring defective areas, a recordable continuous time can be calculated in advance under the following conditions:
- a bit rate in the case of video (MPEG2)
- an encoding mode (AC3, L-PCM, MPEG2) and a bit rate in the case of audio.

In the case of programmed video recording, a video recording time is determined in advance. Hence, by comparing this video recording time with the recordable continuous time, recording destinations can be determined in advance.

The operations and effects of the present invention will be summarized below.

As described above, data (navigation data and presentation data) in individual files complying with the DVD-Video standard is physically continuously recorded. Defective areas (defective sectors) in an information recording area on an information storage medium such as a DVD-R are detected in advance. More specifically, the write result is expected by a test write process that does not actually write data on a medium, and defective areas are detected. On the basis of the detection result of defective areas, a plurality of recordable continuous areas are detected. That is, these plurality of recordable continuous areas do not include any defective areas.

Upon recording a plurality of data in individual files complying with the DVD-Video standard, the sizes of the data and those of the recordable continuous areas are compared, and the recording destination of predetermined data is assigned to a predetermined recordable continuous area on the basis of the comparison result. In this manner, respective data in individual files complying with the DVD-Video standard can be physically continuously recorded. In addition, the information recording area can be effectively used without any losses. Also, to manage the recording order and recording locations, a File Identifier Descriptor and directory information of a video file are used. With the above process, data can be physically continuously recorded for respective recording units while avoiding defects such as scratches on a medium. Even when many defective areas are present on an information storage medium, continuous recording can be stably done without being influenced by the defective areas.

As described above, a file of data complying with the DVD-Video standard must be managed by one Extent. Thus, each such file must be physically continuously recorded. That is, no defective area can be present at the recording destination of the file. According to the present invention, in order to solve this problem, recording locations are relocated for respective titles or files to avoid defective areas. Also, easy data management is attained by indirect reference using the file system.

## Claims

1. An information recording apparatus for recording data complying with a standard, **characterized by** comprising:
a detection unit (10) configured to detect defective areas in an information recording area on an information storage medium, and to detect recordable continuous areas in the information recording area based on the detected defective areas;
a determination unit (10) configured to determine a first recordable continuous area that has a size not less than a first data size of a first recording data unit; and
a recording unit (72) configured to record position information which indicates that the first recording data unit is recorded on the first recordable continuous area in a first specific area of the information recording area, and to record the first recording data unit on the first recordable continuous area, on the basis of a determination result of the determination unit.

2. An apparatus according to claim 1, **characterized in that** the standard is a DVD-Video standard.

3. An apparatus according to claim 1, **characterized in that** the determination unit determines to record the first recording data unit of the first data size on the first recordable continuous area of at least the first data size, and determines to record a second recording data unit of a second data size on a second recordable continuous area of at least the second data size, said second recording data unit following said first recording data unit.

4. An apparatus according to claim 3, **characterized in that** the recording unit records the video management information which contains playback control information used to instruct playback of the second recording data unit after the first recording data unit, said video management information recorded on a second specific area of the information recording area, said recording unit recording the first recording data unit on the first recordable continuous area, and the second recording data unit on the second recordable continuous area.

5. An information recording method for recording data complying with a standard, **characterized by** comprising:
detecting (ST101) defective areas in an information recording area on an information storage medium,
detecting (ST102) recordable continuous areas in the information recording area based detected defective areas;
determining (ST103) a first recordable continuous area that has a size not less than a first data size of first recording data unit;
recording (ST104) the first recording data unit on the first recordable continuous area based on the determination; and
recording (ST104) position information that indicates that the first recording data unit is recorded on the first recordable continuous area in a first specific area of the information recording area.

6. A method according to claim 5, **characterized in that** the standard is a DVD-Video standard.

7. A method according to claim 5, **characterized by** further comprising:
determining to record the first recording data unit of the first data size on the first recordable continuous area of at least the first data size, and determines to record a second recording data unit of a second data size on a second recordable continuous area of at least the second data size.

8. A method according to claim 7, **characterized by** further comprising:
recording video management information which contains playback control information used to instruct playback of the second recording data unit after the first recording data unit, said video management information stored on a second specific area of the information recording area,
recording the first recording data unit on the first recordable continuous area, and
recording the second recording data unit on the second recordable continuous area.

9. An information recording method for recording data complying with a standard, **characterized by** comprising:
detecting (ST101) defective areas in an information recording area on an information storage medium;
detecting (ST102) recordable continuous areas in the information recording area based on the detected defective areas;
determining (ST103) a first recordable continuous area that has a size not less than a first data size of a first recording data unit; and
recording (ST104) the first recording data unit on the first recordable continuous area based on the determination.

10. A method according to claim 9, **characterized in that** the standard is a DVD-Video standard.

11. A method according to claim 9, **characterized by** further comprising:
determining to record the first recording data unit on the first recordable continuous area of at least the first data size; and
determining to record a second recording data unit, which follows the first recording data unit, the second recording data unit having a second data size, and determining to store the second recording data unit on a second recordable continuous area of at least the second data size.

12. A method according to claim 11, **characterized by** further comprising:
recording video management information, which contains playback control information used to instruct playback of the second recording data unit after the recording of the first recording data unit, said video management information recorded on a specific area of the information recording area;
recording the first recording data unit on the first recordable continuous area; and
recording the second recording data unit, which follows the recording data unit, on the second recordable continuous area.

13. An information recording apparatus for recording data complying with a standard, **characterized by** comprising:
a detection unit (10) configured to detect defective areas in an information recording area on an information storage medium, and to detect recordable continuous areas in the information recording area based on the detected defective areas;
a determination unit (10) configured to determine a first recordable continuous area that has a size not less than a first data size of a first recording data unit; and
a recording unit (72) configured to record the first recording data unit on the first recordable continuous area, on the basis of a determination result of the determination unit.

14. An apparatus according to claim 13, **characterized in that**:
said determination unit determines a second recordable continuous area that has a size not less than a second data size of a second recording data unit; and
the recording unit records the second recording data unit on the second recordable continuous area, on the basis of another determination result of the determination unit; and wherein said second recording data unit is recorded after said first recording data unit and is separated from the first recording unit by at least one defective area of said information recording area on said information storage medium.

15. An apparatus as recited in claim 14, **characterized in that** said recording unit further records location information specifying the location of said first and second recording data units on said information storage medium.

16. An apparatus as recited in claim 15, **characterized in that** said recording unit further records video management information used to control playback of said first and second recording data units.

17. An apparatus as recited in claim 16, **characterized in that** said standard is a DVD-Video standard.
